# EUROPEAN PATENT APPLICATION

(11) **EP 4 528 695 A1**
(43) Date of publication of application: **26.03.2025**
(21) Application number: 23807290.4
(22) Date of filing: 27.03.2023
(51) Int. Cl.: G09B 23/30, G09B 9/00

(54) **ORGAN MODEL FOR MEDICAL DEVICE**

(30) Priority: 17.05.2022 JP 2022080569
(71) Applicant: OSAKA UNIVERSITY, Suita-shi Osaka 565-0871 (JP); JMC Corporation, Yokohama-shi, Kanagawa 222-0033 (JP)
(72) Inventor: OKAYAMA, Keita, Suita-shi, Osaka 565-0871 (JP); SAKATA, Yasushi, Suita-shi, Osaka 565-0871 (JP); WATANABE, Daichi, Yokohama-shi, Kanagawa 222-0033 (JP); INADA, Makoto, Yokohama-shi, Kanagawa 222-0033 (JP); YUDASAKA, Takuya, Yokohama-shi, Kanagawa 222-0033 (JP)
(74) Representative: advotec.
(86) International application number: PCT/JP2023/012130
(87) International publication number: WO 2023/223675

(57) **Abstract**

Provided is an organ model for a medical device, with which catheter maneuvers, endoscope maneuvers, and the like can be practiced stably without deformation or damage to the organ model. The invention is an organ model 100 for a medical device, which is held in a container 10 in a state of being filled with a liquid and into which a catheter can be inserted through insertion parts 11a' and 12a' provided on the container 10. The organ model 100 has a soft member 100A including a holding part that is held in the container 10; and a hard member 100B including a plate-shaped part 130 installed on the inner surface of the container 10 and being integrated with the soft member 100A, wherein the hard member 100B is not fixed to the container 10, is attachable to or detachable from the soft member 100A, and is positioned by being connected to the soft member 100A.

## Description

### TECHNICAL FIELD

The present invention relates to an organ model that is used when practicing catheter maneuvers by which diagnosis and treatment is performed by inserting a catheter into a human body, and diagnosis and treatment maneuvers performed by inserting an endoscope, an ultrasonic device, or another medical device that uses electromagnetic waves, and the like. The organ model as used herein corresponds to a lumen type organ, various blood vessels, and the like in an actual human body.

### BACKGROUND ART

Conventionally, as an apparatus for practicing the above-described maneuvers, for example, the catheter simulator disclosed in Patent Document 1 is known. This catheter simulator includes a plurality of heart models corresponding to different types of heart diseases, containers for holding each heart model, and a pump for circulating a stream of water in the containers, so as to promote improvement of catheter maneuvers for patients with cardiac diseases.

The heart models are each formed of a soft resin material and are held in a holding part having a catheter introducing port provided so as to protrude into the container. The container in a state of containing water can hold a heart model such that the heart model floats in water, and a pulsatile flow can be generated within the heart by driving the pump. In this way, it is possible to practice maneuvers similar to actual surgeries for various cardiac diseases by manipulating, in a state in which a heart model is floating in water, a catheter while inserting the catheter into the heart model through the holding part.

### CITATION LIST

### PATENT DOCUMENT

Patent Document 1: WO 2016/158222 A

### SUMMARY OF THE INVENTION

### PROBLEM TO BE SOLVED BY THE INVENTION

Since conventional catheter simulators use organ models (heart models) that are made of soft materials, when a device composed mainly of catheters is manipulated, the force applied to the organ model may cause deformation or damage to the organ model. Furthermore, an organ model formed of a soft material is likely to swing in water, and it is difficult to control the catheter.

The invention was made by paying attention to the above-described problems, and it is an object of the invention to provide an organ model for a medical device, with which catheter maneuvers, endoscope maneuvers, and the like can be practiced stably, without causing deformation or damage to the organ model.

### MEANS FOR SOLVING PROBLEM

In order to achieve the above-described object, the invention is an organ model for a medical device, which is held in a container filled with a liquid and into which a medical device can be inserted through an insertion part provided on the container, wherein the organ model has a soft member including holding parts held in the container, and a hard member including a plate-shaped part installed on an inner surface of the container and being integrated with the soft member, the hard member is not fixed to the container, is attachable to and detachable from the soft member, and is positioned by being connected to the soft member.

As the above-described organ model is configured such that a soft member and a hard member are integrated, it is possible to change the material of the constituent areas depending on the type of the organ in the actual human body and the maneuver simulating the operation of a medical device such as a catheter. For example, in a configuration that simulates the maneuvers of actually inserting a catheter and performing diagnosis and treatment, as the area to be diagnosed and treated is formed of a soft member, and the other areas are formed of a hard member, when a device is manipulated by inserting a catheter, a sensation similar to that of the human body is obtained, and at the same time, the organ model can be suppressed from being deformed or damaged by the force applied to the organ model. Furthermore, the hard member is installed on the inner surface of the container by the plate-shaped part without being fixed by adhesion, screwing, or the like, and since the soft member is held in the container and integrated with the container relative to the hard member in such a state, it is possible to have the soft member in a state of being stably held. As a result, the organ model is suppressed from swinging in the liquid in which the organ model floats, and the catheter is more easily controlled.

Furthermore, the invention is an organ model for a medical device, which is held in a container filled with a liquid and into which a medical device can be inserted through an insertion part provided on the container, the organ model having a lumen type form in which a soft member and a hard member are integrated, wherein a slit enabling attachment and detachment of the soft member is formed in the hard member.

In such an organ model as well, the above-described operating effects can be obtained, and at the same time, as a slit is formed in the hard member, the position of the soft member can be easily determined, allowing the attaching and detaching operation to be easily carried out.

### EFFECT OF THE INVENTION

According to the invention, an organ model for a medical device, with which catheter maneuvers, endoscope maneuvers, and the like can be stably practiced without causing deformation or damage to the organ model, can be obtained.

### BRIEF DESCRIPTION OF DRAWINGS

Fig. 1 is a perspective view illustrating an example of a container that is a constituent element of a catheter simulator in which an organ model for a medical device according to the invention is installed;
Fig. 2 is an overall view illustrating an embodiment of a catheter simulator in which an organ model in which a hard member and a soft member are integrated is installed in the container shown in Fig. 1;
Fig. 3 is a perspective view illustrating a first embodiment of the organ model (heart model), showing the soft member portion;
Fig. 4 is a perspective view illustrating the first embodiment of the organ model (heart model), showing the hard member portion;
Fig. 5 is a perspective view illustrating a heat model in which the soft member shown in Fig. 3 and the hard member shown in Fig. 4 are integrated;
Fig. 6 is a drawing showing the state of mounting when integrating the hard member and the soft member, and is a cross-sectional view taken along line A-A in Fig. 5;
Fig. 7 is a drawing illustrating a second embodiment of the organ model (heart model);
Fig. 8 is a drawing illustrating a third embodiment of the organ model (heart model); and
Fig. 9 is a drawing illustrating a fourth embodiment of the organ model (heart model).

### MODE(S) FOR CARRYING OUT THE INVENTION

Embodiments of the invention will be described below with reference to the drawings.

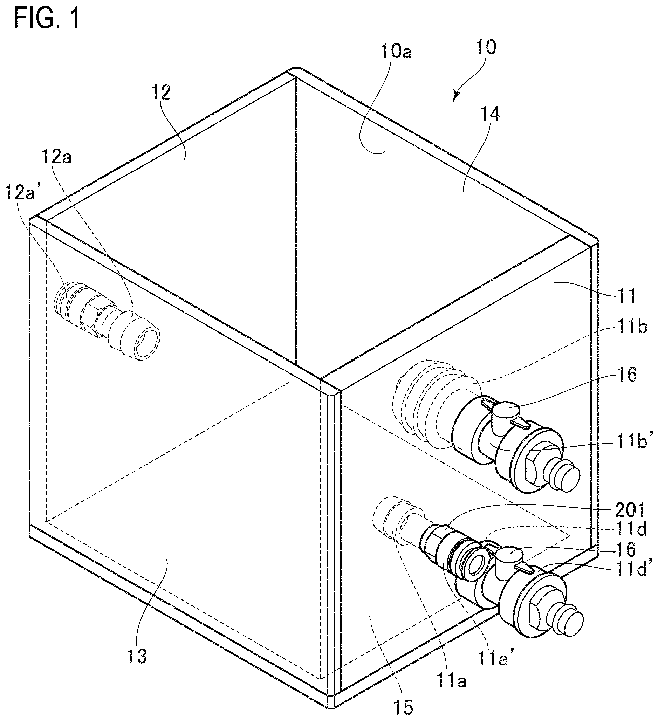

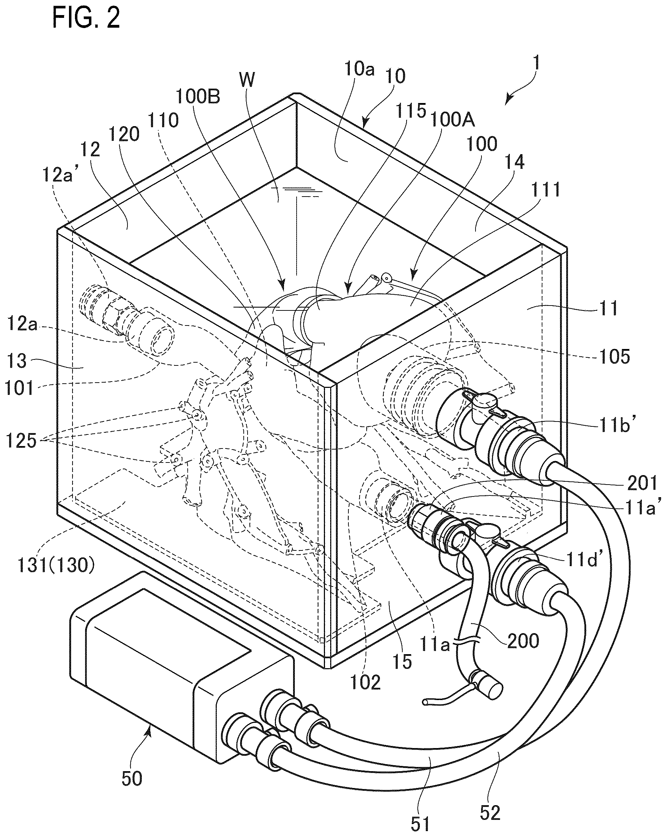

Fig. 1 and Fig. 2 are drawings illustrating an embodiment of the invention, and Fig. 1 is a perspective view illustrating an example of a container, which is a constituent element of a catheter simulator, while Fig. 2 is an overall view illustrating an embodiment of the catheter simulator in which an organ model is installed in the container shown in Fig. 1.

The term "organ model" according to the invention corresponds to an organ existing in an actual human body (a luminal organ, a parenchymatous organ, a blood vessel, or the like). The organ model of the present embodiment is configured in a form imitating the heart portion (luminal organ) of the human body, is intended to promote an improvement in the maneuvers for catheter manipulation related to cardiac diseases, for example, pulmonary artery valve placement. Furthermore, the medical device according to the invention corresponds to various devices (for example, a catheter, forceps, an endoscope, and an ultrasonic diagnostic device) that are inserted into the above-described organ model.

The catheter simulator 1 shown in the drawings includes: a container 10 housing an organ model (hereinafter, referred to as a heart model) 100; and a pump (pulsatile flow generating pump) 50 circulating a liquid W, such as water, in a state in which the container 10 is filled with the liquid. This pump 50 is configured to be driven intermittently so as to cause a pulsatile flow in the liquid filled in the container 10.

The container 10 of the present embodiment includes a substantially cubic-shaped accommodation part 10a defined by four side walls 11 to 14 and a bottom face 15 to accommodate a liquid W such as water or electrolytic water. In this case, the side wall 11 corresponds to the lower body side of the actual human body, and the side wall 12 corresponds to the upper body side of the actual human body.

The side wall 11 is provided with connection parts 11a and 11b that can be connected to and held by holding parts provided on the heart model 100 in a state in which the accommodation part 10a is filled with a liquid, such that the connection parts 11a and 11b protrude into the accommodation part. Furthermore, the side wall 12 is provided with a connection part 12a that can be connected to and held by a holding part provided on the other end side of the heart model 100, such that the connection part 12a protrudes into the accommodation part. The connection parts 11a, 11b, and 12a are configured in a cylindrical form and protrude into the accommodation part, and by plugging in the holding parts (constituting a simulated blood vessel passage or the like) of the heart model 100 into the portions, the heart model 100 is held in a state of floating in the container filled with a liquid.

The connection parts 11a and 12a also function as insertion parts (catheter introducing ports) into which a catheter is inserted from the outside. That is, the connection parts 11a and 12a are integrated with insertion parts 11a' and 12a', which coaxially protrude outside the container, and an introduction tube 200 for a catheter will be connected to each of the insertion parts. In this case, the introduction tube 200 has a catheter introducing terminal at its tip. The introducing terminal has a function of preventing the liquid filled in the introduction tube 200 from leaking to the outside (valve function), and has a structure in which a trainee can introduce a catheter into the introduction tube 200 and can withdraw the catheter from there.

The connection part 11b is for circulating a liquid within the accommodation part and generating a pulsatile flow inside the heart model 100 held therein, and the connection part 11b is to be connected to an inlet port (liquid introducing port) 105 formed to protrude into the right ventricle 111 of the heart model 100. This inlet port 105 is an element that does not exist in the actual heart, and as an inlet pipe 51 that supplies a liquid from the pump 50 is connected to an inlet pipe 11b' that protrudes to the outside on the same axis as the connection part 11b, it is possible to generate a flow that is the same as the actual pulsatile flow in the internal space of the heart model (portion connecting the space on the right ventricle side to the pulmonary artery).

Furthermore, the side wall 11 is provided with a discharge port 11d for discharging the liquid inside the accommodation part 10a to the pump 50 side. This discharge port 11d is provided with a discharge pipe 11 d' protruding to the outside on the same axis, and as an outflow tube 52 for allowing the liquid to flow to the pump 50 side is connected to this discharge pipe 11d', the liquid that has flowed into the heart model 100 is circulated via the pump 50.

The side walls 11 to 14 and the bottom face 15 are formed from a material having a strength capable of stably accommodating the liquid W and the heart model 100. Furthermore, with regard to the container 10, it is acceptable as long as it is formed in any shape capable of stably accommodating the liquid and the heart model. In addition, it is preferable that the material of the side walls 11 to 14 and the bottom face 15 constituting the container has transparency. Examples of a material having such strength and transparency include acrylic, polycarbonate, PET, and polystyrene. When the side walls and the bottom face have transparency as described above, it is possible to observe the behavior of the heart model provided inside the container 10, a catheter to be inserted from the outside of the container 10, and the like by visual inspection during a simulation.

Incidentally, even in a case where the container 10 is formed from a material that can be visually recognized by a trainee, when a camera is installed to display the image on a monitor or the like, or when X-ray fluoroscopy is performed to display the image on a monitor or the like, a simulation for grasping the behavior of the catheter only on the monitor can be performed, and it is also possible to realize a state close to reality. The use of visual inspection, checking of monitor display, or X-ray imaging can be selected according to the stages and contents of training.

The upper part of the container 10 is opened, and a lid that is openable or closable may be disposed thereon. As a result, when doing preparation or cleanup for training, such as an operation of filling the accommodation part 10a with a liquid, or an operation of installing a heart model in the liquid, the operations can be carried out efficiently through the opening at the top face of the container. Furthermore, by making the lid transparent, it is possible to prevent dust from entering, while maintaining the visibility from the direction of the top face of the container. In addition, it is also possible to prevent deterioration of visibility caused by shaking of the liquid surface by bringing the lid into close contact with the liquid surface.

Since the connection parts 11a and 12a have a function of allowing introduction of a catheter in addition to a function of holding the heart model, a communication hole through which a catheter is inserted is formed at each of the connection parts 11a and 12a. As described above, an introduction tube 200 for introducing a catheter to be manipulated by a trainee from the outside of the container 10 is connected to each of the insertion parts 11a' and 12a' protruding to the outside coaxially with the connection parts 11a and 12a, respectively (in Fig. 2, only an introduction tube connected to the insertion part 11a' is shown). For this reason, the introduction tube 200 includes a connection mechanism that can be manipulated from the outside of the container 10. The connection mechanism has, for example, a structure in which when the introduction tube 200 is plugged into the insertion part 11a' (12a'), and a manipulation member (a nut or the like) 201 is rotated, the introduction tube 200 can be fixed or released, so that a manipulation of attaching or detaching the introduction tube can be easily carried out. This connection mechanism can be of various types, such as a known one-touch type.

As described above, a liquid is supplied from the pump 50 into the heart model 100 of the present embodiment through the inlet port 105 held at the connection part 11b. The liquid in the accommodation part is configured to be returned to the pump 50 side via the discharge port 11d (discharge pipe 11d') and the outflow tube 52, so that a pulsatile flow flows within the heart model 100.

Furthermore, it is preferable that the connection part 11b (inlet pipe 11b') and the discharge port 11d (discharge pipe 11d') are provided with a blocking valve 16. This blocking valve 16 prevents the liquid in the accommodation part 10a from leaking out of the container 10, by blocking the connection part 11b and the discharge port 11d when the pump 50 is detached from the container 10 after a simulation is completed.

For a simulation in a state in which the heart model 100 is supported, the accommodation part 10a is filled with a liquid W, and the heart model 100 is installed in a state of floating in the liquid. When the heart model 100 is in a floating state, visibility under direct viewing and under X-ray fluoroscopy is ensured, and at the same time, the trainee may obtain a feeling of touch close to reality at the time of catheter manipulation.

Since the elements accommodated in the container 10 are limited only to a heart model having the same size as that of the human heart and a liquid allowing the heart model to float therein, the container 10 can be miniaturized. The external dimensions of the container 10 according to the present embodiment are about 20 cm × 20 cm × 15 cm, and the amount of the liquid (water) required for filling the container is approximately limited to about 3 L to 6 L. When the container 10 is miniaturized, waste of space in the place where the simulation is performed can be eliminated, and the storability and transportability of the container 10 and the catheter simulator using the container 10 are improved. Furthermore, since the amount of water to be filled in the accommodation part 10a of the container is limited to about 6 L, even in a place where tap water cannot be utilized, simulation can be performed by transporting water in a tank or the like, and the range of selection for the place of practice is broadened. In addition, since the weight of the container 10 filled with water is so light that the trainee can handle the container alone, preparation and cleanup of the simulation can also be carried out even without the restriction of an assistant.

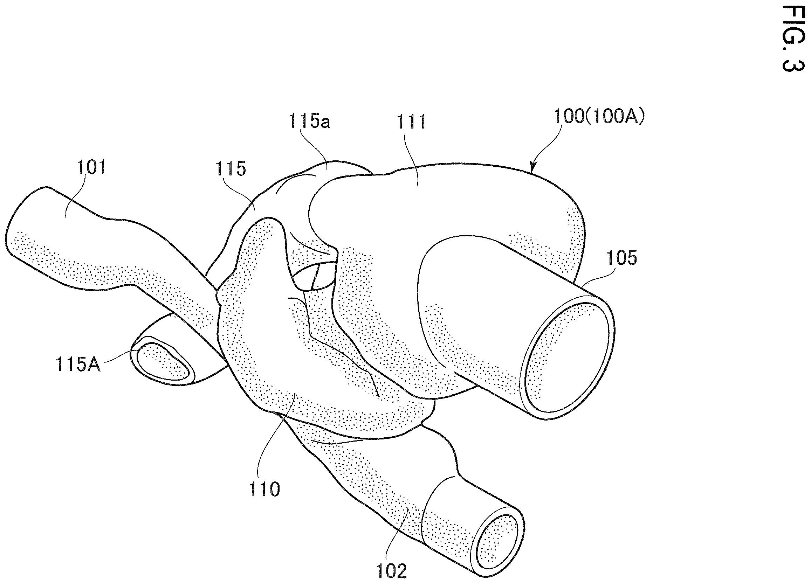

Next, the configuration of the above-described heart model 100 will be described with reference to Fig. 3 to Fig. 6.

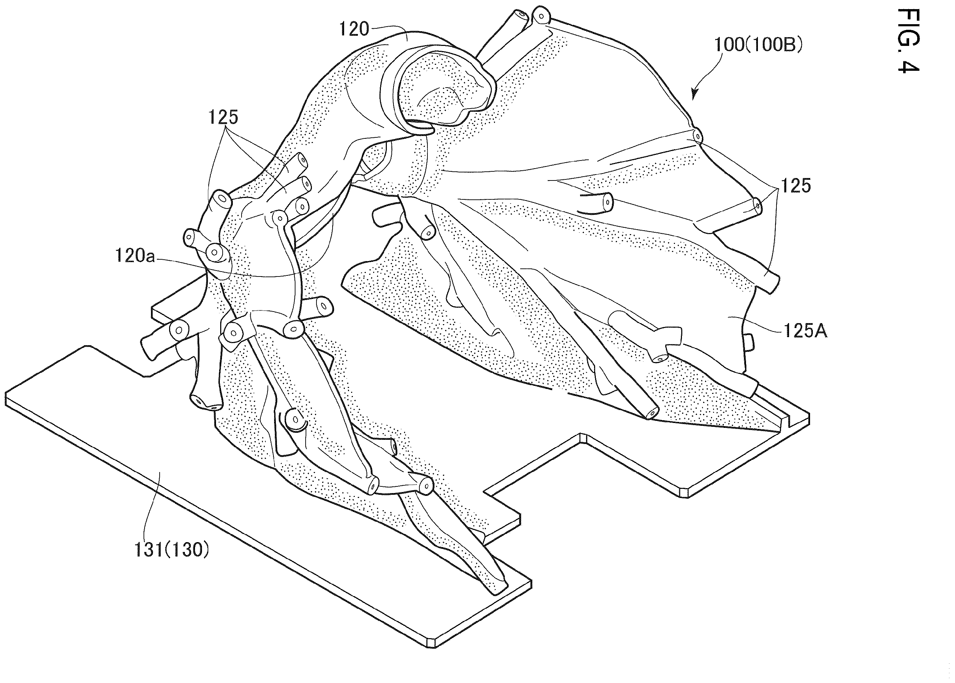

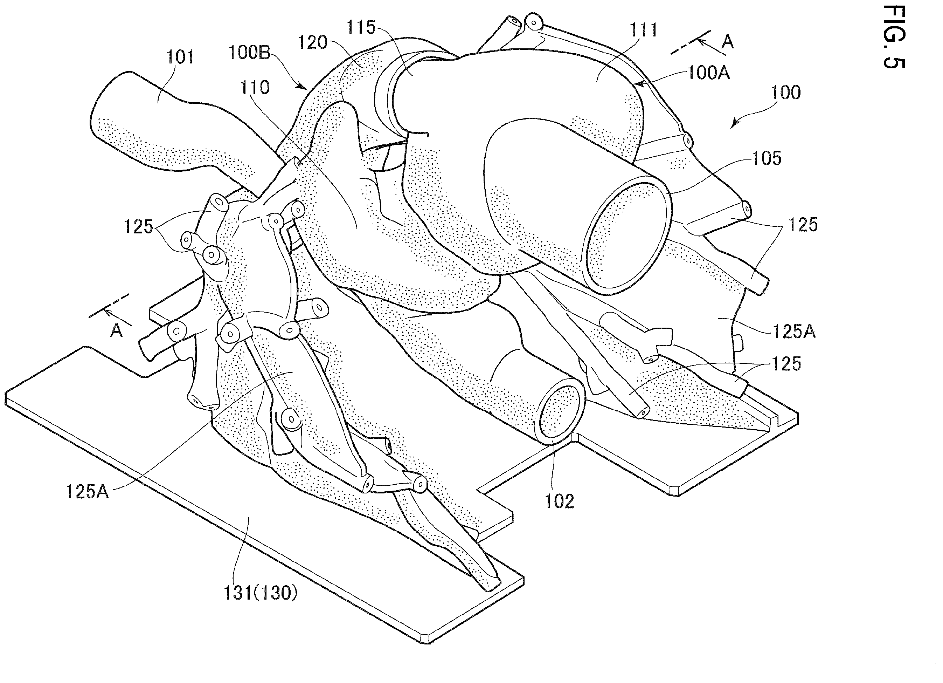

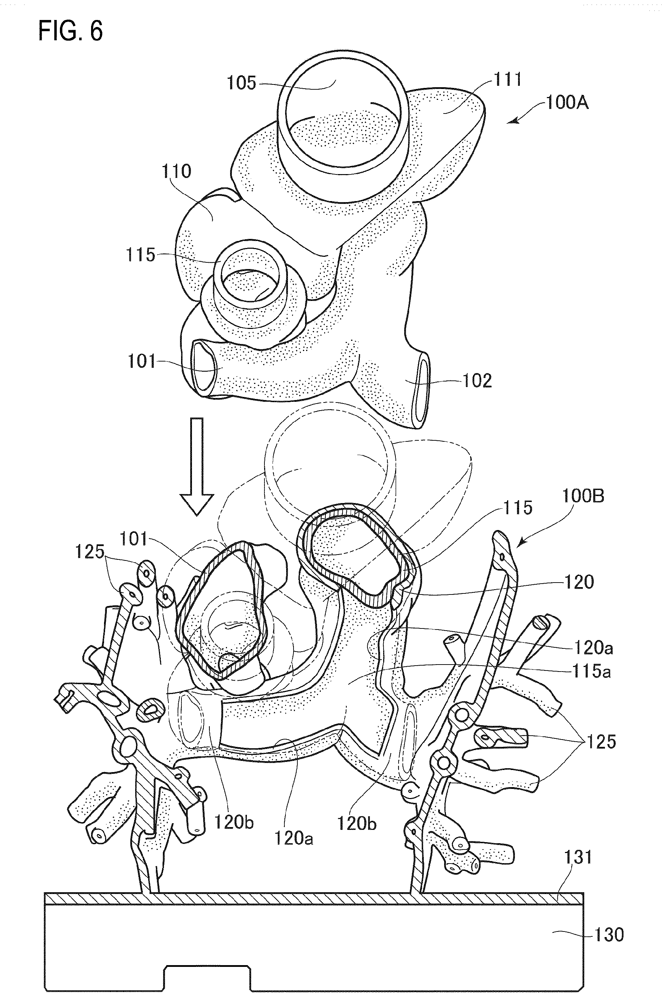

In these drawings, Fig. 3 is a perspective view illustrating the soft member portion of the heart model 100, Fig. 4 is a perspective view illustrating the hard member portion, Fig. 5 is a perspective view illustrating the heart model in a state in which the soft member shown in Fig. 3 and the hard member shown in Fig. 4 are integrated, and Fig. 6 is a drawing showing the state of mounting when integrating the hard member and the soft member, and is a cross-sectional view taken along line A-A in Fig. 5.

In the heart model 100, the soft member 100A and the hard member 100B are integrated so as to be attachable and detachable, and the superior vena cava 101 and the inferior vena cava 102, which communicate with the right atrium 110, are formed to protrude from the soft member 100A as a simulated blood vessel passage, just like an actual heart. The heart model 100 can be held so as to float within the accommodation part by plugging these superior vena cava 101 and inferior vena cava 102 into the connection parts 12a and 11a, respectively.

The soft member 100A is formed from a material having elasticity close to that of the heart of an actual human body, for example, PVA (polyvinyl alcohol), polyurethane, an epoxy resin, an unsaturated polyester, a phenol resin, silicon, or materials similar to these, a thermosetting resin or thermoplastic resin other than those, which are used singly or in combination of a plurality thereof, so that catheter manipulation can be practiced with a tactile sensation close to that of an organ of the human body.

The soft member 100A includes a right atrium 110 to which the superior vena cava 101 and the inferior vena cava 102 are connected, and a right ventricle 111 that is connected to the right atrium 110 through a tricuspid valve, and the inlet port 105 is formed in this right ventricle 111. Furthermore, a pulmonary artery 115 is formed to protrude from the right ventricle 111 through a pulmonary artery valve, and the pulmonary artery 115 is branched into two at a bifurcation (branched portion) 115a. Fig. 3 shows one side of the branched portion, with an opening 115A formed at its tip side.

In addition, in the soft member 100A, constituent elements such as the left atrium, the left ventricle, the aorta communicating with the left ventricle, and the pulmonary vein connecting to the lungs, may be formed as in an actual heart. Furthermore, the aorta and the pulmonary vein may be connected (held) to the container 10. In this case, it is desirable that the holding part for holding the heart model 100 within the container 10 is provided on the soft member 100A, and thereby, it is possible to facilitate connection to the connection parts 11a, 11b, and 12a. Furthermore, in a configuration in which a plurality of holding parts are provided on the soft member 100A, it is desirable that at least one of the holding parts constitutes (also serves as) an insertion part through which a catheter can be inserted, as described above. Furthermore, the holding part of the present embodiment is formed of the superior vena cava 101, the inferior vena cava 102, and the inlet port 105, which are formed of soft members.

When the above-described heart model 100 is formed only of soft members, deformation and damage to the model are observed due to the force applied to the heart model when manipulating a device mainly composed of a catheter, and therefore, the portion excluding the area to be actually treated is formed of the hard member 100B (constructed as a hybrid model of a soft member and a hard member). In this case, the hard member 100B can be integrally molded using a 3D printer from a material harder than the soft member 100A, for example, polyurethane, an epoxy resin, an acrylic resin, a polycarbonate resin, an unsaturated polyester, a vinyl chloride resin, or polyethylene terephthalate.

When the heart model 100 is formed only of hard members, the feeling of manipulation of a device mainly formed of a catheter (flexibility of an actual heart) cannot be reproduced.

The hard member 100B of the present embodiment includes a pulmonary artery 120 on the hard member side, into which the pulmonary artery 115 formed on the soft member 100A is fitted.

Hereinafter, the pulmonary artery on the soft member side will be referred to as soft pulmonary artery 115, and the pulmonary artery on the hard member side will be referred to as hard pulmonary artery 120.

The hard pulmonary artery 120 is formed in a tubular shape (also referred to as a lumen) similar to the soft pulmonary artery 115, and a slit 120a is provided along the longitudinal direction of the hard pulmonary artery so as to accommodate the soft pulmonary artery 115 and allow the two members to be integrated. That is, by forming the slit 120a, the hard pulmonary artery 120 becomes shaped like a half-pipe, and it is possible to accommodate the soft pulmonary artery 115 through the opening portion formed by the slit 120a. The slit 120a can be modified as appropriate, such as being formed along the longitudinal direction of a branched lumen, as will be described below, in addition to the longitudinal direction of the hard pulmonary artery (luminal area).

Here, the method for connecting the soft member 100A and the hard member 100B will be described. Generally, it is easy to connect the two members by adopting a technique of overlapping a hard portion with a soft portion in the same manner as in the case of putting on socks, that is, by adopting an overlapping structure in which the hard portion is on the inside and the soft portion is on the outside. In contrast, when an overlapping structure in which the soft member is on the inside and the hard member is on the outside is adopted, there is a problem in setting the soft member on the hard member. When it is configured to have a short overlapping portion, it is also possible to manually push the soft member into the hard member; however, there is a disadvantage that the soft member easily comes off.

There is also another disadvantage that the organ model cannot cope with luminal structures that are branched into two or more branches. That is, in the case of a luminal structure having its tip branched into two or more branches, a step of pushing the branched portion in a form that is compressed by pinching or the like, into the hard member and then restoring the branched portion into the original shape, is required. Even when the members are connected firmly, additional effort will be required in turn to remove the branched portion. For this reason, even for a luminal structure with its tip part branched into two or more branches, it is possible to set the soft member 100A on the hard member 100B relatively easily by forming a slit in the branched portion.

Furthermore, for example, in a case where it is desired that the proximal side is formed of a soft member and the distal side is formed of a hard member with respect to the direction of catheter advancement, when the soft member on the proximal side is disposed on the outer side of the hard member, since the soft member can easily deform by the manipulation of a catheter, there is a possibility that a level difference may occur between the soft member and the hard part at the connection part. As a result, not only there may be a problem in the catheter manipulation, but also the connection part may come off or the soft member may be damaged.

As an example of a case in which the proximal side is formed of a soft member and the distal side is formed of a hard member with respect to the direction of catheter advancement, a case where the luminal organ is the pulmonary artery (an example of reproducing the portion extending from the heart to the pulmonary artery) may be mentioned, as in the case of the present embodiment.

When the proximal side is formed of a hard member and the distal side is formed of a soft member, the heart portion becomes a hard member, and the blood vessel portion becomes a soft member, which will cause a problem that the heart does not pulsate, while the peripheral blood vessel portion is excessively shaken due to pulsation. Therefore, in order to reproduce the pulsation of the heart and the stiffness of peripheral blood vessels, it is desirable that the proximal side is formed of a soft member and the distal side is formed of a hard member with respect to the direction of catheter advancement, as in the case of the present embodiment.

In this way, even in a case where the proximal side is formed of a soft member and the distal side is formed of a hard member with respect to the direction of catheter advancement, the above-described problems can be solved when it is possible to easily connect the soft member on the inside and the hard member on the outside.

In the present embodiment, a heart (luminal organ) model is configured such that the soft pulmonary artery 115, which is a constituent element of the soft member 100A, is easily connected on the inside, and the hard pulmonary artery 120, which is a constituent element of the hard member 100B, is easily connected to the outside.

In order to easily realize such a connection, a slit 120a is provided along the longitudinal direction of the lumen (hard pulmonary artery 120), and thereby the soft member can be easily fitted (pushed in) into the hard member. In this case, with regard to the range of forming the slit, when the angle at which the slit opens relative to the center of the lumen is set to a range that does not exceed 180°, desirably less than 150°, and more desirably less than 120°, in the entire circumferential direction, the soft member 100A can be made less likely to come off during a simulation operation. Furthermore, it is desirable that that the angle of opening is set to 90° or greater, and as a result, it is possible to make the soft member 100A easily fitted into the hard member 100B and less likely to come off during attachment and detachment manipulation.

According to the above-described mounting mode, in the portion where the slit 120a is formed, a double structure of a hard member and a soft member is formed in a state in which a portion of the soft member 100A (soft pulmonary artery 115) is exposed. With such a double structure, the portion that the device comes into contact with when inserting a catheter can have the same feeling of touch as that of an actual human body, and at the same time, when force is applied, a reinforcing effect can be obtained by the hard member on the outer side of the double structure, and the soft member can be prevented from being damaged or scratched.

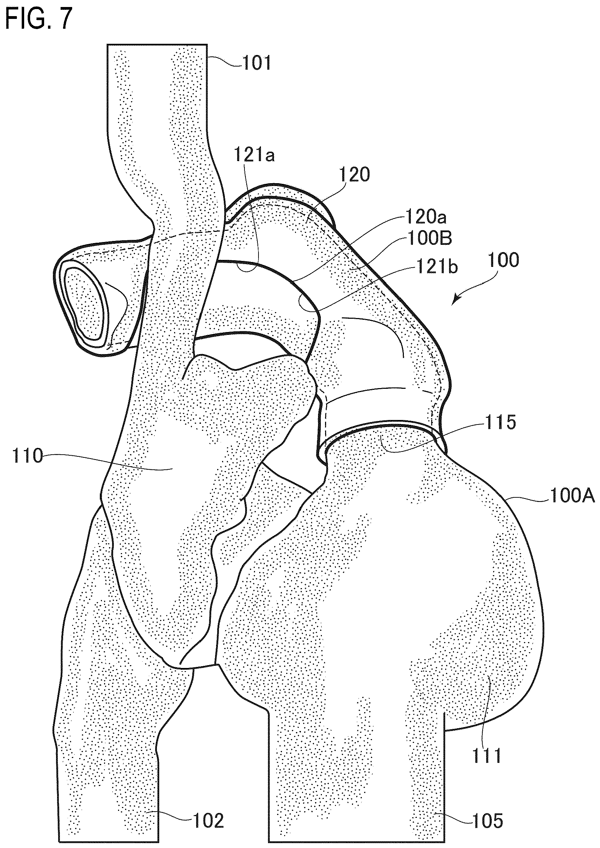

It is desirable that the slit formed in the hard member has both properties of making it easy for the soft member to be fitted into the slit and less likely to come off, and even from the purpose of maintaining visibility under direct viewing, it is desirable that the portion of the double structure does not occupy an excessively large range. From this viewpoint, the slit to be formed needs to be devised in terms of the shape as well as the angle of opening as described above. For example, as shown in the second embodiment in Fig. 7, it is desirable that the slit 120a formed in the hard pulmonary artery 120 has a middle portion 121a with a width larger than the width of the end part side 121b. In this manner, the soft member can be easily attached (easily pushed in) to the hard member, and the soft portion can be held tightly by the double structure of the end parts while maintaining visibility.

Furthermore, even with a luminal structure with its tip part branched into two or more branches, as shown in Fig. 6, it is possible to set the soft member 100A on the hard member 100B relatively easily by providing a slit 120a in the branched portion 115a as well. In addition, by configuring the tip of the soft member (tip 115A of the soft pulmonary artery 115) inserted through the slit 120a to be partially plugged into the hard member side, the soft member can be prevented from coming off unexpectedly. That is, it is desirable to form an overlapped part (ring-shaped plug-in part) 120b having a double structure overlapping the entire circumference (360°) each other on the end part side of the slit of the hard pulmonary artery 120, and thereby the soft member 100A (soft pulmonary artery 115) can be prevented from coming off.

When the above-described plug-in part 120b is formed, it is desirable that the portion overlapping the entire circumference each other is formed to be shorter than the portion where the slit 120a exists. When this proportion is reversed, the configuration becomes difficult to be fitted and removed. That is, when viewed in the longitudinal direction of the lumen, it is desirable that the length of the portion overlapping the entire circumference each other is shorter than the length of the portion where the slit 120a exists (if possible, as this proportion is smaller, it is more desirable). Furthermore, it is desirable that such a plug-in part 120b is formed at an end part of the slit 120a so that the soft pulmonary artery 115 can be fixed as it is when the soft pulmonary artery 115 is inserted into the hard pulmonary artery 120 from the slit 120a.

With regard to the above-described configuration, it is desirable that a recess (depression) that is approximately the same as the thickness of the soft member is formed on the hard member side, and a level difference does not occur at the transition part between the soft member and the hard member. In this way, situations such as discomfort during catheter manipulation and difficulty in passage of the catheter can be avoided by preventing a level difference, and when performing angiography under X-ray fluoroscopy, it is possible to reduce the difference from actual clinical practice. Furthermore, it is also possible to reduce the thickness of the soft member so that the overlapping area between the soft member 100A and the hard member 100B does not have an excessive thickness. Reducing the thickness of the overlapping portion contributes to avoid exaggeration of the blood vessel wall under X-ray fluoroscopy and deterioration of translucency of a transparent model under direct viewing.

Furthermore, the slit 120a of the present embodiment is formed on the lower surface side (bottom face side) of the hard pulmonary artery 120, and a soft member is to be fitted from the lower side toward the upper side. The heart model 100 of the present embodiment is configured to enable practicing of maneuvers related to the placement of a pulmonary artery valve, and since an inserted catheter advances in such a way that force is applied toward the ceiling (chest plate side), as the hard pulmonary artery 120 is located on the upper side, the soft member can be prevented from coming off or being damaged. However, depending on the maneuver, the area where force is less likely to be applied may vary, and therefore, a slit may be formed in accordance therewith. For example, in a maneuver in which the force of the catheter acts on the bottom face side, a slit may be formed on the top face side, and in such a configuration, the soft member can be easily fitted into the hard member when the two members are integrated.

A large number of peripheral blood vessels (pulmonary blood vessels) 125 are integrally formed on the downstream side of the hard pulmonary artery 120 of the hard member 100B, as is the case of the lungs of the human body. These peripheral blood vessels 125 are branched into a large number of branches from the hard pulmonary artery 120 and also serve as areas where guidewires are inserted when performing maneuvers related to the placement of the pulmonary artery valve. Furthermore, it is desirable that the peripheral blood vessels (pulmonary blood vessels) 125 are provided on a connecting plate 125A that is formed integrally with the hard pulmonary artery 120.

When the peripheral blood vessels 125 are integrated with the connecting plate 125A in this manner, it is possible to prevent the peripheral blood vessels 125 from being damaged during handling and the like.

The hard member 100B includes a plate-shaped part 130 that is installed on the inner surface of the container 10. It is desirable that the plate-shaped part 130 is not physically fixed to the container 10 by adhesion, screws, or the like. That is, the plate-shaped part 130 can stably maintain its position within the container by being in close contact with any of the inner surfaces of the container 10 and by being integrated with the soft member 100A held in the container through the hard member 100B. In this way, the soft member 100A is positioned by connecting the soft member 100A to be integrated with the hard member 100B, so that the position thereof can be stabilized, and at the same time, since the hard member (plate-shaped part) is not fixed to the container, the hard member can be easily attached or detached.

The plate-shaped part 130 can be integrally formed from the same material as the hard member 100B, and when handleability and mounting properties are considered, it is desirable that the plate-shaped part 130 has a configuration including a flat plate part 131 that is in planar contact with any of the inner surfaces of the container 10. That is, by arranging the flat plate part 131 to be in close contact with any of the inner surfaces of the container 10, it is possible to stably dispose the hard member 100B.

In the present embodiment, the flat plate part 131 is in close contact with the bottom face 15 of the container 10 and is also formed in a shape that is substantially the same as that of the bottom face 15. This is to allow the hard member 100B to maintain a stable position in the container against forces that may be assumed in actual clinical practice, such as loads from the manipulation of a device such as a catheter, due to the frictional force generated between the flat plate part 131 and the side surfaces of the container, the adhesion effect generated between the planes of the flat plate part 131 and the bottom face 15 of the container, the pressure from the liquid in the container, and the like, even without physical fixing by adhesion or the like between the hard member 100B and the container 10. That is, in the present embodiment, the position of the flat plate part 131 can be stabilized just by dropping the flat plate part 131 from the opening of the container 10.

The plate-shaped part 130 may be configured to be adhered or screwed to the inner surface of the container, and the shape thereof is not particularly limited; however, by configuring the plate-shaped part 130 to include a flat plate part that brings the plate-shaped part 130 into close contact with the bottom face 15 of the container 10, the following operating effects are obtained, as in the case of the present embodiment.

In a case where the hard portion of the hard member 100B is adhered to the container 10, not only this causes problems when setting the soft member 100A or during a cleaning operation, but also when a portion of the hard member is damaged, it will be necessary to replace the entire hard member. Furthermore, even in a case where fixing is achieved using screws or the like rather than adhesion, the number of steps for setting increases, which leads to risks such as damage and water leaks. On the other hand, when the hard portion is not fixed to the container, there is a possibility that the heart model 100 may move from a predetermined position due to the force applied during catheter manipulation; however, by providing the hard member 100B with the flat plate part 131 having the same shape as the inner surface (bottom face 15 in the present embodiment) of the container 10, it is possible to maintain a stable position within the container 10 against forces that can be assumed in actual clinical practice without fixing by adhesion or the like.

It is desirable that the above-described plate-shaped part (flat plate part 131) has a structure that prevents the flat plate part 131 from floating up from the bottom face of the container so that the hard member does not move due to the force pressing the device even in a case where excessive force is applied during a simulation. For example, it is possible to prevent the hard member from floating up from the bottom face of the container due to the behavior of the device, by providing protrusions on the inner surface on the container 10 side to the extent that does not cause a problem when inserting the flat plate part 131 into the container, or by attaching a weight that resists buoyancy to the flat plate part.

With regard to the heart model 100 of the above-described configuration, the soft member 100A may be assembled with the hard member 100B to be integrated, and the resultant may be installed in this state in the container 10. In this case, the process of connection can be facilitated, without excessive slippage occurring after connection, by applying a liquid such as water or alcohol on the outside of the soft member 100A or on the inside of the hard member 100B. Alternatively, the hard member 100B may be set in the container 10 in a state of being filled with a liquid, and the soft member 100A may be integrated with the hard member 100B in this state.

Then, the superior vena cava 101 and the inferior vena cava 102 of the soft member 100A are fitted into the connection parts 12a and 11a of the container 10, respectively, and thereby the heart model 100 is held so as to float in the accommodation part 10a of the container 10. Furthermore, by connecting the inlet port 105 to the connection part 11b of the container 10, a flow that is the same as an actual pulsatile flow can be generated by the pump 50 in the internal space of the heart model 100 (portion connecting the space on the right ventricle side to the pulmonary artery). That is, the catheter manipulation can be carried out with a feeling similar to that of an actual pulsatile flow.

In a catheter simulator in which the heart model 100 is set as described above, for example, when practicing maneuvers related to the placement of a pulmonary artery valve, an introduction tube 200 for a catheter is connected to the insertion part 11a' as shown in Fig. 2, and a guidewire is inserted therein. This catheter approach is performed so as to pass from the right atrium 110 through the right ventricle 111, which are formed of the soft member 100A, and to move to the soft pulmonary artery 115. At this time, a flow that is the same as an actual pulsatile flow is generated by the pump 50 from the right ventricle 111 to the pulmonary artery 115 (120), and a simulation can be performed in the same condition as that of the actual heart.

The tip of the inserted guidewire is in a state of being supported by the peripheral blood vessels 125 of the hard member 100B, and subsequently the catheter main body (delivery catheter for placement of a pulmonary artery valve) is inserted along with the guidewire. Since the guidewire is supported by a hard portion, the delivery catheter can be inserted in a stable state, and then the maneuvers for installing a pulmonary artery valve at the boundary portion between the right ventricle and the pulmonary artery can be practiced.

In the above-described configuration, since the portion in which the pulmonary artery valve is installed is formed of the soft member 100A, it is possible to practice catheter maneuvers with a feeling that is the same as that of an actual heart. In this case, when the heart model is formed only of soft members as in conventional catheter simulators, since the heart model is in a state of floating in a liquid, and since a flow is generated by pulsation, the tip side of the pulmonary artery is in a state of being prone to swinging (in an actual human body, since the movement of blood vessels is indirectly controlled by the presence of solid organs nearby, such great swinging does not occur). In the present embodiment, as described above, since the tip side of the pulmonary artery is formed of a hard member, in the maneuvers of placing a pulmonary artery valve, the support state of the guidewire at the tip side is stabilized, and it is possible to practice the maneuvers in a condition similar to that of actual catheter manipulation.

According to the heart model 100 having the above-described configuration, since the constituent elements thereof (soft member 100A and hard member 100B) can be separated, the heart model 100 acquires a portable structure, and improvement in handleability is promoted. Furthermore, when compared with a case in which the heart model 100 is formed only of soft members, the blood vessel at the site where a catheter is inserted is immobilized, and the catheter can be controlled in the same manner as in the case of an actual human body. Furthermore, when compared with a case in which the heart model is formed only of hard members, the sensation of the portion through which a catheter passes becomes similar to that of an actual human body, and improvement in the maneuvers is promoted.

In the heart model having the above-described configuration, a bulging part or a stenotic (narrowing) part may be provided in the portion having a double structure. When these parts are provided, it is easy to control the movement of the portion having a double structure, which contributes to prevention of derailment and the like during catheter manipulation. Furthermore, upon performing the above-described maneuvers, when the soft member 100A is mounted on the hard member 100B, it is desirable to configure the heart model such that a gap is formed between the soft member and the hard member.

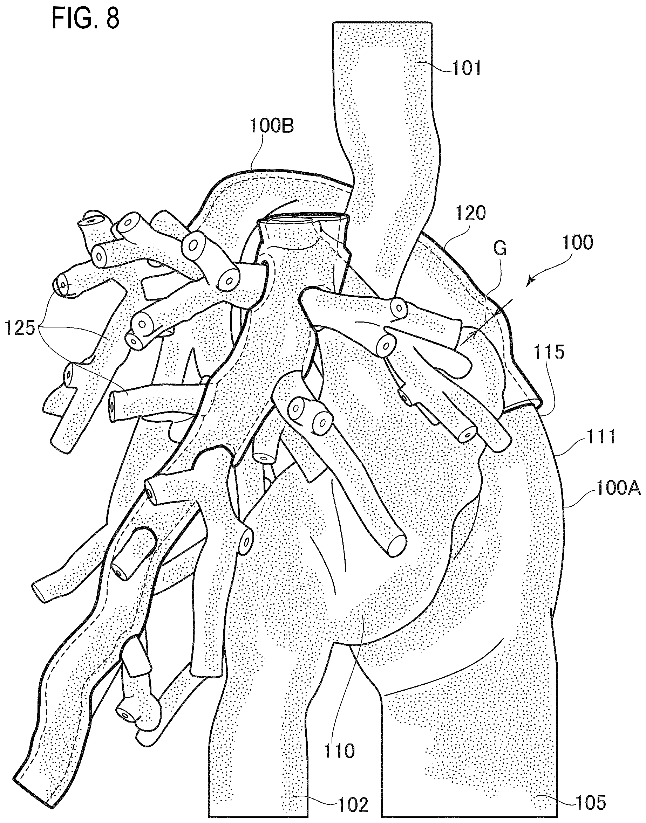

Specifically, for example, as shown in the third embodiment in Fig. 8, it is desirable to configure the heart model such that the soft pulmonary artery 115 and the hard pulmonary artery 120 are not brought into close contact with each other, but a gap G is formed between the two pulmonary arteries in at least a portion of the overlapping portion thereof.

With a heart model configured in this way, when a lesion part is provided in the blood vessel portion of the soft member 100A, blood vessels can be expanded by catheter manipulation, and catheter maneuvers can be performed with the same sensation as that of an actual human body. Furthermore, with regard to the peripheral blood vessels 125, it is possible to appropriately modify the constituent elements, such as being formed in the soft member 100A, as shown in Fig. 8.

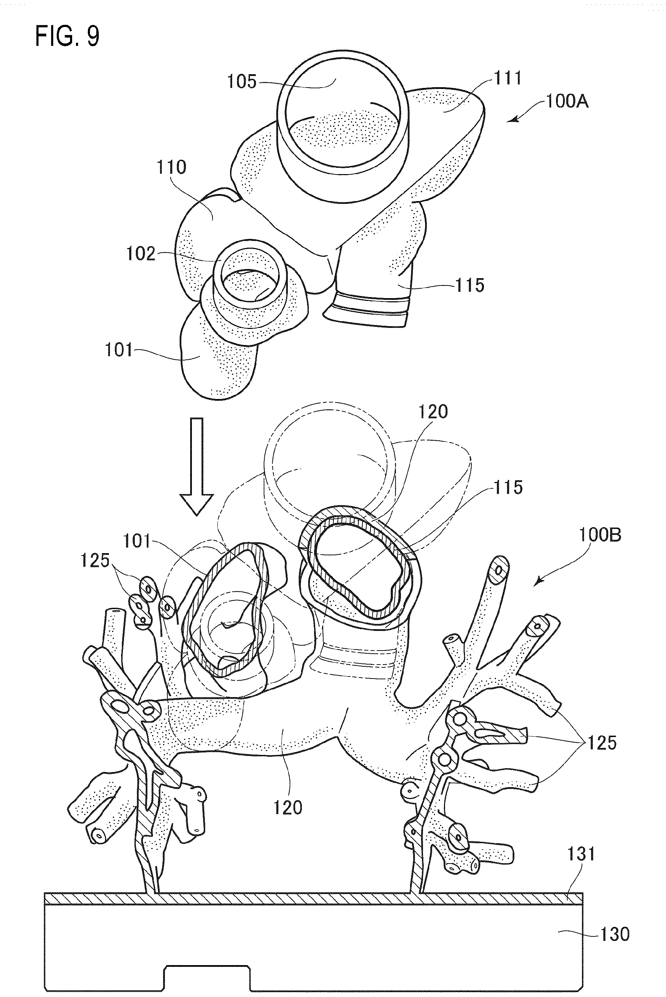

In the above-described structure, connection between the soft member 100A and the hard member 100B is achieved by forming a slit 120a in the hard member 100B; however, the connection mode is not limited to a slit, and various modifications can be made. For example, when the luminal structure is not branched, and the overlapping portion is short, it is also possible to manually push the soft member into the hard member. Specifically, as shown in the fourth embodiment in Fig. 9, when the soft member 100A is incorporated into the hard member 100B, for example, the luminal portions of the two may be connected to each other to be integrated. That is, it is possible to integrate the two by internally fitting the tip of the soft pulmonary artery 115 of the soft member 100A into the tip opening of the hard pulmonary artery 120 of the hard member 100B. Of course, the tip of the soft pulmonary artery 115 may be externally fitted into the tip opening of the hard pulmonary artery 120 of the hard member 100B.

Furthermore, in the invention, the organ model has a hybrid structure of a soft member and a hard member; however, various modifications can also be made for the hybrid structure.

For example, instead of simply connecting a soft member and a hard member, the entirety may be formed of a soft material, and a hard member as a holder may be integrated with the soft member by covering a portion of the soft member. In this case, from the viewpoint of combining the soft member and the hard member, a sufficient gap may be provided between the soft member and the hard member. Furthermore, as a gap is present, the soft member can have moderate mobility, and this allows the catheter manipulation to resemble the catheter manipulation in actual clinical practice.

Furthermore, in the present embodiment, the heart is used as an example of a lumen type organ model; however, the invention is not limited to the heart or a blood vessel and can be applied to organs with various lumens, and for example, it is also possible to apply the invention to organs other than blood vessel portions, such as the digestive tract, the trachea, and the ureter. Furthermore, the medical device to be inserted into the formed organ model is not limited to the above-described catheter, and medical devices with various configurations can be inserted depending on the surgical procedure and the like.

Thus, embodiments of the organ model according to the invention have been described; however, the invention is not limited to the above-described embodiments, and various modifications can be made.

The color of the organ model 100 may be the same color as that of a real heart so that the inside cannot be visually recognized, so that a trainee may be able to perform a simulation while irradiating the organ model with X-radiation and observing a monitor. Alternatively, the organ model may be given a transparent or semitransparent color so as to allow the trainee to perform a simulation while observing the movement of a catheter, a guidewire, or another device inserted by the trainee, directly by visual inspection. Even when a cardiac organ model is formed from a material that can be visually recognized by the trainee, it is also possible to grasp the behavior of the catheter only on the monitor by X-ray fluoroscopy, by covering the container 10 with a cover or the like.

In the present embodiment, the soft member is connected to the container 10 at three sites and to the hard member at one site; however, the connection method, the position of connection, and the number of sites to be connected can be modified as appropriate. Furthermore, in the present embodiment, a catheter can be inserted from two sites (superior and inferior vena cavae); however, the organ model may be supported so that a catheter can be inserted from another area. In addition, the hybrid structure may be a hybrid structure (double structure) up to the tips of the organ model; however, it is possible to adopt a hybrid structure as appropriate depending on the organ or the catheter maneuver, such as adopting a hybrid structure up to the main tube. Furthermore, the slit may be formed at places where force is less likely to be applied when a catheter is inserted, and the method of forming a slit, for example, the length of the slit and the size of the opening, can also be modified as appropriate.

In addition, the plate-shaped part 130 provided on the hard member 100B may be configured such that the hard member can be installed between the plate-shaped part 130 and the inner surface of the container 10 so as not to move, and the size, shape, thickness, and the like of the plate-shaped part 130 can be modified as appropriate.

### EXPLANATIONS OF LETTERS OR NUMERALS

- 1: CATHETER SIMULATOR
- 10: CONTAINER
- 10a: ACCOMMODATION PART
- 11a, 11b, 12a: CONNECTION PART
- 11a', 12a': INSERTION PART
- 50: PUMP
- 100: HEART MODEL
- 100A: SOFT MEMBER
- 100B: HARD MEMBER
- 130: PLATE-SHAPED PART
- 131: FLAT PLATE PART
- 200: INTRODUCTION TUBE FOR CATHETER

## Claims

1. An organ model for a medical device, which is held in a container in a state of being filled with a liquid and into which a medical device can be inserted through an insertion part provided on the container, the organ model comprising:
a soft member including a holding part held in the container; and
a hard member including a plate-shaped part installed on an inner surface of the container and being integrated with the soft member,
wherein the hard member is not fixed to the container, is attachable to and detachable from the soft member, and is positioned by being connected to the soft member.

2. An organ model for a medical device, which is held in a container in a state of being filled with a liquid and in which a medical device can be inserted through an insertion part provided on the container,
the organ model having a lumen type form in which a soft member and a hard member are integrated,
wherein a slit enabling attachment and detachment of the soft member is formed in the hard member.

3. The organ model for a medical device according to claim 1, wherein the holding part is provided at a plurality of sites, and
at least one of the holding parts includes a catheter introducing port through which the catheter can be inserted.

4. The organ model for a medical device according to claim 3, wherein at least one of the holding parts includes a liquid introducing port for introducing a liquid into the organ model in a state of being held in the container.

5. The organ model for a medical device according to claim 1, wherein the plate-shaped part includes a flat plate part that is in planar contact with any of inner surfaces of the container in which the organ model is installed.

6. The organ model for a medical device according to claim 5, wherein the flat plate part has a shape approximately the same as that of any of the inner surfaces of the container in which the organ model is installed.

7. The organ model for a medical device according to claim 2, wherein the slit formed in the hard member is formed along a longitudinal direction of a lumen or a longitudinal direction of a branched lumen.

8. The organ model for a medical device according to claim 2, wherein the slit formed in the hard member has a middle portion with a width larger than a width on an end part side.

9. The organ model for a medical device according to claim 2, wherein the portion where the slit is formed has a double structure of a hard member and a soft member in a state in which a portion of the soft member is exposed.

10. The organ model for a medical device according to claim 2, wherein the soft member and the hard member include an overlapping part having a double structure overlapping an entire circumference each other, and
the overlapping part has a length in a longitudinal direction shorter than a length in a longitudinal direction of a portion where the slit exists.

11. The organ model for a medical device according to claim 2, wherein a plug-in part into which the soft member is inserted is formed at an end part of the slit formed in the hard member.

12. The organ model for a medical device according to claim 10, wherein the portion having a double structure is provided with a bulging part or a stenotic part.

13. The organ model for a medical device according to claim 1 or 2, wherein when the soft member is mounted on the hard member, a gap is formed between the soft member and the hard member.

14. The organ model for a medical device according to claim 1 or 2, wherein the lumen type is a blood vessel.

15. The organ model for a medical device according to claim 1 or 2, wherein the medical device is a catheter.
